# EUROPÄISCHE PATENTSCHRIFT

(11) **EP 3 219 435 B1**
(45) Veröffentlichungstag und Bekanntmachung des Hinweises auf die Patenterteilung: **03.06.2020**
(21) Anmeldenummer: 17160856.5
(22) Anmeldetag: 14.03.2017
(51) Int. Cl.: B23Q 1/00

(54) **EINZUGSSPANNELEMENT, INSBESONDERE EINZUGSSPANNBOLZEN ODER EINZUGSSPANNRING, UND ZUGEHÖRIGES SPANNSYSTEM**
CLAMPING ELEMENT, IN PARTICULAR CLAMPING BOLT OR CLAMPING RING, AND ASSOCIATED CLAMPING SYSTEM
ÉLÉMENT DE SERRAGE DE TRACTION, EN PARTICULIER BOULON DE SERRAGE DE TRACTION OU BAGUE DE SERRAGE DE TRACTION ET SYSTÈME DE SERRAGE ASSOCIÉ

(30) Priorität: 14.03.2016 DE 202016101411 U
(43) Veröffentlichungstag der Anmeldung: 20.09.2017
(73) Patentinhaber: Schunk GmbH & Co. KG Spann- und Greiftechnik, 74348 Lauffen am Neckar (DE)
(72) Erfinder: Schwendele, Florian, 88525 Dürmentingen (DE)
(74) Vertreter: DREISS Patentanwälte PartG mbB

(56) Entgegenhaltungen:
- EP-A1- 2 759 370
- DE-A1- 10 317 346
- DE-C1- 19 703 354
- JP-A- 2013 126 696
- US-A1- 2006 261 534

## Beschreibung

Die Erfindung betrifft Einzugsspannelemente, insbesondere ein Nullpunktspannsystem. Einzugsspannelemente werden zum Spannen in einer oder an einer Spannaufnahme verriegelt. Dabei bilden die Einzugsspannelemente mit den Spannaufnahmen ein Spannsystem, insbesondere ein Nullpunktspannsystem. Das Einzugsspannelement weist einen beispielsweise konusflächigen Angriffsabschnitt auf, der so ausgebildet ist, dass beim Verriegeln des jeweiligen Einzugsspannelements ein in der Spannaufnahme vorgesehenes Verriegelungselement gegen den Angriffsabschnitt derart wirkt, dass das Einzugsspannelement in die Spannaufnahme eingezogen wird. Die Spannelemente sind dabei an einem zu bearbeitenden Werkstück oder einem Spannmodul, welches das zu bearbeitende Werkstück trägt, vorgesehen, und werden zum positionsgenauen Spannen und anschließendem Bearbeiten mit den oder an den Spannaufnahmen verriegelt. Bei solchen Spannsystemen handelt es sich in erster Linie um Nullpunktspannsysteme, mit denen zu bearbeitende Werkstücke wiederholbar positionsgenau gespannt werden können. Die einzelnen Spannaufnahmen sind vorzugsweise auf einem gemeinsamen Träger, beispielsweise auf einem Tisch oder einer Platte, angeordnet.

Die Einzugsspannelemente können dabei insbesondere als Einzugsspannbolzen ausgebildet sein, die zur Verriegelung in die Spannaufnahmen, die dann insbesondere ringförmig ausgebildet sind, eintauchen. Derartige Einzugsspannbolzen und zugehörige Spannaufnahmen sind beispielsweise aus der DE 10 2010 007 924 A1 oder der DE 10 2010 013 912 A1 vorbekannt. Die Einzugsspannbolzen weisen konusflächige Angriffsabschnitte auf, gegen welche die Verriegelungselemente der Spannaufnahmen wirken.

Die Einzugsspannelemente können allerdings auch als Einzugsspannringe ausgebildet sein, in die zur Verriegelung die Spannaufnahmen, die dann insbesondere bolzenartige Erhebungen ausgebildet sind, eintauchen. Derartige Einzugsspannringe und zugehörige Spannaufnahmen sind beispielsweise aus der EP 2 371 478 A2 vorbekannt.

Zur Bearbeitung von größeren Werkstücken, wie beispielsweise Zylinderblöcke von Verbrennungsmotoren, werden in der Regel drei oder mehr Spannelemente verwendet, die dann mit den jeweiligen Spannaufnahmen verriegelt werden.

Beim Spannen eines Werkstücks oder eines Aufspannmoduls mit drei oder mehr Spannvorrichtungen entsteht regelmäßig auf Grund von Fertigungstoleranzen, von thermischen Ausdehnungen des Werkstücks und/oder von freiwerdenden Eigenspannungen auch während der Bearbeitung eine mechanische Überbestimmung, was zu weiteren mechanischen Spannungen im Werkstück beziehungsweise im gesamten Spannsystem führen kann. Dabei ist bei der Bearbeitung von größeren Werkstücken oder der Anordnung von größeren Werkstücken an größeren Aufspannmodulen oder Spannplatten gerade eine thermische Ausdehnung problematisch. Eine Erwärmung des Werkstücks kann insbesondere auf Grund einer entsprechenden Bearbeitung erfolgen. Die thermische Ausdehnung kann dabei im 1/10 bis 1/1 Millimeterbereich liegen. Dies kann zur Folge haben, dass insbesondere unter Verwendung von mehr als drei Spannelementen die Spannelemente dann nicht zentrisch in die Spannaufnahmen einführbar sind. Neben einem Höhenversatz kann auch ein Radialversatz auftreten, der zu einer mechanischen Überbestimmung führt, woraus mechanische Spannungen im Werkstück oder dem Spannmodul beziehungsweise der Spannplatte entstehen können.

Aus der DE 20 2009 006 429 U1 ist es beispielsweise in diesem Zusammenhang vorbekannt, eine Höhenanpassung mittels entsprechend hohen Ausgleichsadaptern zu ermöglichen. Die EP 2 353 774 B1 schlägt vor, einen Höhenausgleich an der Spannvorrichtung vorzusehen.

Aus der DE 10 2013 201 310 A1 sind Spannelemente bekannt, die zwar eine Spannfunktion, aber keine Niederzugfunktion aufweisen.

Aus der JP 2013 126696 A ist ein Einzugsspannelement mit Merkmalen des Oberbegriffs des Patentanspruchs 1 bekannt. Ein ähnliches Spannelement ist aus der DE 197 03 354 C1 bekannt.

Der vorliegenden Erfindung liegt die Aufgabe zu Grunde, Spannelemente sowie ein zugehöriges Spannsystem bereitzustellen, mit denen, bzw. bei dem mehrere Spannelemente in ihnen jeweils zugeordneten, mehreren Spannaufnahmen gespannt werden können, wobei eine mechanische Überbestimmung vermieden werden soll. Das Spannsystem soll dabei vergleichsweise einfach aufgebaut sein und wenig Bauraum beanspruchen.

Diese Aufgabe wird durch einen Einzugsspannelement mit den Merkmalen des Anspruchs 1 gelöst. Es ist folglich vorgesehen, dass das Einzugsspannelement einen um eine Mittellängsachse verlaufenden Grundabschnitt und ein gegenüber dem Grundabschnitt in wenigstens in einer radialen Richtung beweglich angeordnetes Halteelement aufweist, wobei der Angriffsabschnitt am Halteelement so vorgesehen ist, dass beim Verlagern des Verriegelungselements in die Verriegelungslage ein Ausgleich des Halteelement gegenüber dem Grundabschnitt in wenigstens einer radialen Richtung ermöglicht ist.

Dadurch, dass das Halteelement in wenigstens einer radialen Richtung, und vorzugsweise in sämtliche radiale Richtungen, gegenüber dem Grundabschnitt beweglich angeordnet ist, kann das Einzugsspannelement sicher in der Verriegelungslage in die zugehörige Spannaufnahme bzw. gegen diese gezogen werden. Aufgrund der radialen Beweglichkeit des Halteelements gegenüber dem Grundabschnitt kann folglich das Halteelement beim Verriegeln in eine radiale Richtung seitlich verlagert werden bzw. zur Mittellängsachse eine exzentrische Position einnehmen.

Es hat sich gezeigt, dass es vorteilhaft ist, unterschiedliche Einzugsspannelemente zu verwenden. Zum einen kann vorgesehen sein, dass das Halteelement bezüglich des Grundabschnitts lediglich in einer radialen Richtung verlagerbar ist. Ein solches Einzugsspannelement wird nachfolgend als ausgleichendes Einzugsspannelement bezeichnet. Die radiale Richtung, in welcher das Halteelement zum Grundabschnitt exzentrisch verlagerbar ist, kann dabei genau die Richtung sein, welche vom ausgleichenden Einzugsspannelement hin zu einem starren Einzugsspannelement verläuft, welcher letztlich den Referenzpunkt des zu spannenden Werkstücks vorgibt.

Gemäß der Erfindung weist der Grundabschnitt bzw. das Halteelement zwei parallel zueinander und in Richtung der einen radialen Richtung verlaufende Flächenabschnitte auf, wobei dann das Halteelement bzw. der Grundabschnitt mit diesen Flächenabschnitten korrespondierende Anlageabschnitte aufweist. Dadurch kann erreicht werden, dass das Halteelement lediglich in der einen radialen Richtung um den Grundabschnitt beweglich angeordnet ist. Das Halteelement kann folglich nur in eine Richtung exzentrisch zum Grundabschnitt, bzw. zu dessen Mittellängsachse, verlagert werden.

Der Ausgleichsabstand kann dabei im Betrieb zwischen 0,5 und 3 mm und insbesondere im Bereich von 1 bis 2 mm liegen. Dadurch kann gewährleistet werden, dass das Halteelement sich in radialer Richtung gegenüber dem Grundabschnitt ausreichend verlagern kann.

Um zu erreichen, dass das Halteelement in einer Nichtspannlage eine zum Grundabschnitt konzentrische Lage einnimmt ist denkbar, dass zwischen dem Halteelement und dem Grundabschnitt elastisch nachgiebige Ausgleichsmittel vorgesehen sind. Als Ausgleichsmittel kommen insbesondere gummielastische Elemente, wie um den Grundabschnitt herumlaufende Gummiringe, in Betracht.

Insbesondere ist denkbar, dass das elastisch nachgiebige Ausgleichsmittel in einer Aussparung oder einer Nut verliersicher angeordnet ist.

Das Halteelement als solches kann am Grundabschnitt insbesondere zwischen grundabschnittseitigen Schultern angeordnet sein. Dadurch wird das Halteelement in axialer Richtung am Grundabschnitt positioniert. Dabei kann der Grundabschnitt ein Grundteil und ein T- oder pilzförmig ausgebildetes Kopfteil umfassen, wobei eine Schulter vom Grundteil und eine Schulter vom Kopfteil gebildet werden. Das Kopfteil kann dabei mit dem Grundteil über eine Sicherungsschraube gefügt sein. Die Sicherungsschraube kann dabei insbesondere das Grundteil in axialer Richtung durchdringen und beispielsweise unmittelbar in das Werkstück eingeschraubt sein. Die Sicherungsschraube kann allerdings auch in ein Aufspannmodul oder in eine Spannplatte eingeschraubt sein.

Das axiale Abstandsmaß der beiden Schultern ist dabei so gewählt, dass es geringfügig größer ist als die Breite des Halteelements. Dadurch wird gewährleistet, dass das Halteelement in radialer Richtung gegenüber dem Grundabschnitt beweglich ist, ohne das es an den Schultern verkantet oder verklemmt.

Das Halteelement kann zudem im Bereich seiner umlaufenden Außenkanten Anfasungen aufweisen, wobei an oder in diesen Anfasungen umlaufende Dichtelemente vorgesehen sein können. Hierdurch kann vermieden werden, dass unerwünschte Medien in den Bereich zwischen dem Halteelement und dem Grundabschnitt gelangen können.

Ferner ist denkbar, dass der Grundabschnitt den Anfasungen in axialer Richtung gegenüberliegende Gegenanfasungen aufweisen kann, die insbesondere spiegelsymmetrisch zu den Anfasungen ausgebildet sind. Die umlaufenden Dichtelemente können dann in einer Einkerbung liegen, die von der jeweiligen Anfasung und der jeweiligen Gegenanfasung gebildet wird.

Ferner ist denkbar, dass das Halteteil von einem Basisteil und einem insbesondere lösbar am Basisteil angeordneten, den Angriffsabschnitt aufweisen Angriffsteil gebildet wird. Dies hat den Vorteil, dass unterschiedliche Angriffsteile für unterschiedliche Ausführungen von Spannaufnahmen Verwendung finden können, wobei stets ein identisches Basisteil für die unterschiedlichen Angriffsteile vorgesehen sein kann

Das Einzugsspannelement kann gemäß der Erfindung als Einzugsspannbolzen ausgebildet sein, bei dem das Halteelement den Grundabschnitt in radialer Richtung umgibt. Gemäß der Erfindung kann auch vorgesehen sein, dass das Einzugsspannelement als Einzugsspannring ausgebildet ist, bei dem der Grundabschnitt das Halteelement in radialer Richtung umgibt.

Die eingangs genannte Aufgabe wird auch gelöst durch ein Spannsystem mit den Merkmalen des Patentanspruchs 7. Erfindungsgemäß zeichnen sich diese Spannsysteme dadurch aus, dass ein Spannelement als starres Einzugsspannelement ausgebildet ist, das keinen Ausgleich in eine radiale Richtung zulässt und dass wenigstens ein weiterers Spannelement als oben beschriebenes, erfindungsgemäßes Einzugsspannelement ausgebildet ist. Hierdurch wird gewährleistet, dass durch das starre Einzugsspannelement ein definierter Maßpunkt als Referenzpunkt vorgegeben ist. Dadurch, dass das weitere Einzugsspannelement als ausgleichendes Einzugsspannelement ausgebildet ist, kann erreicht werden, dass insbesondere aufgrund thermischer Ausdehnungen des Werkstücks oder des Spannmoduls dennoch ein wiederholbares und positionsgenaues Spannen möglich ist.

Vorteilhaft ist, wenn ein Spannelement als ausgleichendes Einzugsspannelement ausgebildet ist, das einen Ausgleich in lediglich eine radiale Richtung zulässt. Dies hat den Vorteil, dass das zu spannende Werkstück oder Spannmodul zwischen den beiden Spannpunkten lediglich im Hinblick auf den Abstand der beiden Spannelement variieren kann. Beim Verriegeln der Spannelemente kann es folglich dazu kommen, dass das Werkstück bzw. Spannmodul um das starre Spannelement geringfügig verdreht wird, da das Halteelement des ausgleichenden Einzugsspannelements lediglich in Richtung hin zum starren Spannelement verschiebbar ist. Dadurch kann ein variierendes Stichmaß zwischen den beiden Spannelementen in Richtung zwischen den Spannelementen ausgeglichen werden.

Allerdings ist ferner vorteilhaft, wenn ein Spannelement als schwimmendes Einzugsspannelement ausgebildet ist, das einen Ausgleich in sämtliche radiale Richtungen ermöglicht. Dieses schwimmende Spannelement ist vorzugsweise als drittes oder weiteres Einzugsspannelement am Werkstück oder am Spannmodul vorgesehen. Je nach Geometrie des Werkstücks oder des Spannmoduls kann folglich über das dritte, schwimmende Einzugsspannelement ein sicheres Spannen erfolgen, wobei dieses Einzugsspannelement in Richtung der anderen beiden Einzugsspannelemente sich ändernde Stichmaße ausgleichen kann.

Als besonders vorteilhaft hat sich ein Spannsystem herausgestellt, das am Werkstück oder Spannmodul ein starres Einzugsspannelement, ein ausgleichendes Einzugsspannelement und wenigstens ein weiteres schwimmendes Einzugsspannelement vorsieht. Das ausgleichende Einzugsspannelement gleicht folglich das Stichmaß zwischen dem starren Spannelement und dem ausgleichenden Einzugsspannelement aus. Das weitere, schwimmende Einzugsspannelement kann die Stichmaße zwischen dem starren Einzugsspannelement zum schwimmenden Einzugsspannelement sowie vom ausgleichenden Einzugsspannelement zum schwimmenden Einzugsspannelement ausgleichen. Vorteilhafterweise ist die Anordnung derart, dass das starre Einzugsspannelement und das eine ausgleichende Einzugsspannelement als diejenigen Spannelemente gewählt werden, die den größten Abstand zueinander vorsehen. Die anderen Spannelemente, die einen geringeren Abstand zum starren Einzugsspannelement aufweisen, sind dann vorzugsweise als schwimmende Einzugsspannelemente ausgebildet. Dadurch kann insgesamt ein sicheres Spannen des Werkstücks bzw. des Spannmoduls mit mehreren Einzugsspannelementen realisiert werden.

Je nach Ausführungsform ist auch denkbar, dass ein oder mehrere schwimmende Einzugsspannelemente durch Fixierspannbolzen ersetzt werden, wie sie beispielsweise in der DE 10 2013 201 310 A1 beschrieben sind.

Weitere Ausgestaltungen und Einzelheiten der Erfindung sind den Figuren und der nachfolgenden Beschreibung zu entnehmen, anhand derer ein Ausführungsbeispiel der Erfindung näher beschrieben und erläutert sind.

Es zeigen:
- Figur 1: ein Werkstück mit Spannbolzen von schräg unten;
- Figur 2: das Werkstück gemäß Figur 1, eingespannt mit einem Spannsystem gemäß der Erfindung;
- Figur 3a, 3b: ein ausgleichendes Einzugsspannelement in Einzelteildarstellung gemäß der Erfindung;
- Figur 4a, 4b: ein schwimmendes Einzugsspannelement in Einzelteildarstellung; und
- Figur 5a, 5b: ein weiteres Einzugsspannelement in Form eines Einzugsspannrings in Einzelteildarstellung.

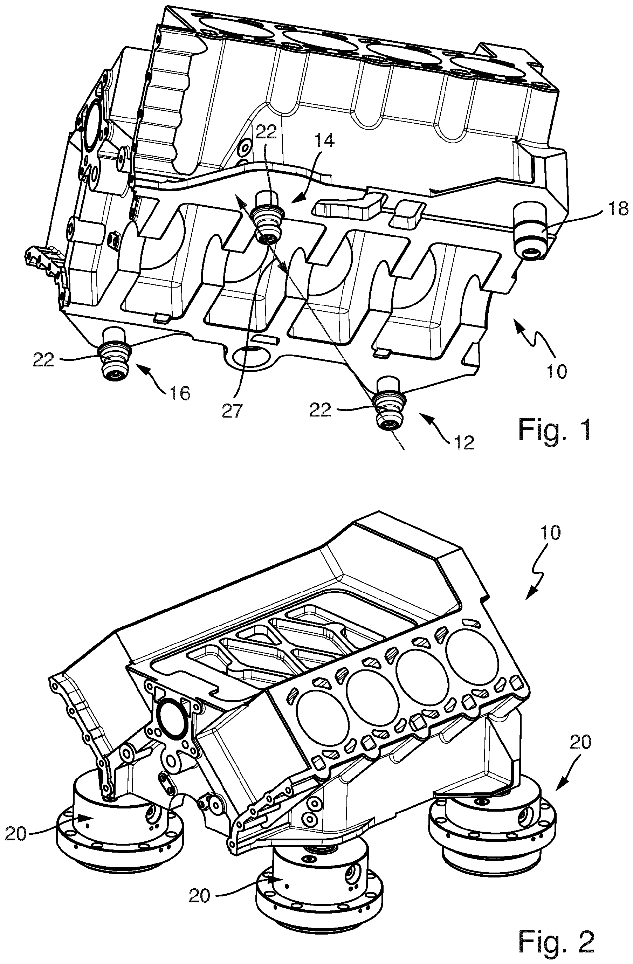

In der Figur 1 ist ein Werkstück 10 in Form eines Zylinderblockes gezeigt, an dem insgesamt vier Einzugsspannelemente in Form von Spannbolzen 12, 14, 16, 18 zum positionsgenauen Spannen des Werkstücks vorgesehen sind.

In Figur 2 ist das Werkstück 10 in einem eingespannten Zustand dargestellt. Die insgesamt vier Spannbolzen 12, 14, 16, 18 sind dazu jeweils in einer ihnen zugeordneten Spannaufnahme 20 verriegelt.

Wie aus Figur 1 deutlich wird, sind die Spannbolzen 12, 14, 16, 18 unmittelbar am Werkstück angeordnet. Alternativ dazu ist möglich, dass die Spannbolzen an einem Spannmodul oder einer Spannplatte angeordnet sind, an welcher das zu bearbeitende Werkstück angebracht ist.

Die in Figur 2 dargestellten Spannaufnahmen 20 sind auf einem nicht dargestellten Grundmodul, insbesondere einer Grundplatte angeordnet. Die Grundplatte mit den Spannaufnahmen 20 bildet dann im vorliegenden Fall eine 4-fach Spannstation, da insgesamt vier Spannaufnahmen 20 vorgesehen sind.

Die einzelnen Spannaufnahmen 20 sehen Verriegelungselemente vor, die insbesondere in radialer Richtung aus einer Entriegelungslage in eine Verriegelungslage verlagerbar sind. In der radial äußeren Entriegelungslage ist es möglich, die Spannbolzen 12, 14, 16 und 18 in die Spannaufnahmen einzuführen beziehungsweise aus den Spannaufnahmen herauszuführen. In der Verriegelungslage wirken die Verriegelungselemente mit den Spannbolzen zusammen.

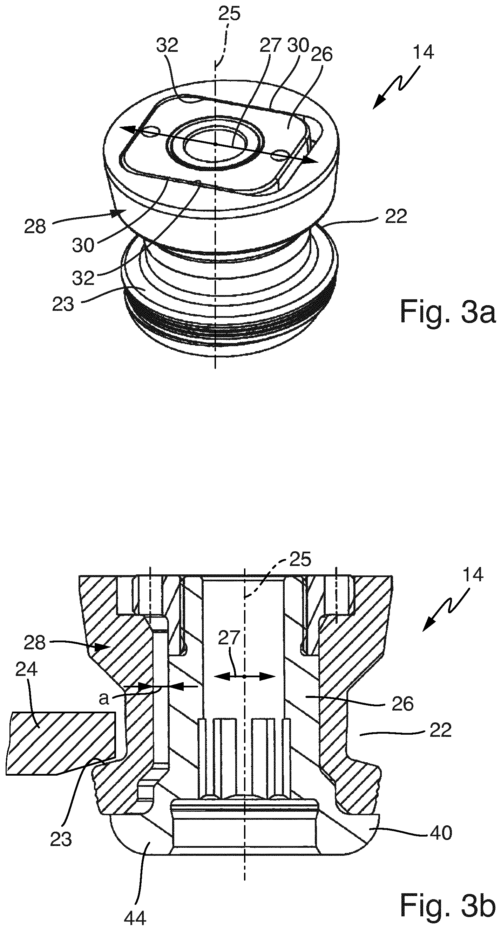

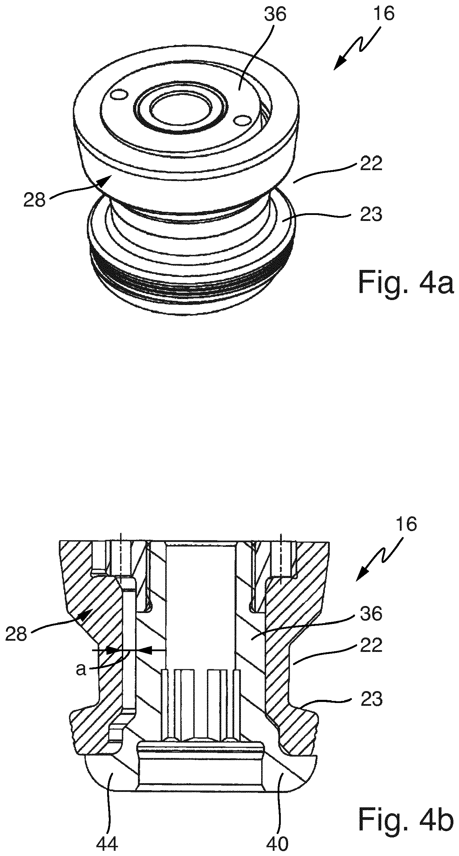

Dazu weisen die drei Spannbolzen 12, 14, 16 eine umlaufende Verriegelungsnut 22 auf, in welche die Verriegelungselemente, die beispielshaft in Figur 3a und 4a mit dem Bezugszeichen 24 gekennzeichnet sind, zur Verriegelung des Spannbolzens eintauchen.

Die Verriegelungselemente können, wie in Figur 3 dargestellt, als Verriegelungsschieber ausgebildet sein. Allerdings ist auch denkbar, dass die Verriegelungselemente beispielsweise als Verriegelungskugeln und/oder flexibel oder auch andersartig ausgebildet sind.

Die Spannbolzen 12, 14, 16 sind derart ausgebildet, dass sie im Zusammenspiel mit den Verriegelungselementen in die Spannaufnahmen 20 eingezogen werden. Wie insbesondere aus den Figuren 3 und 4 deutlich wird, weisen die Verriegelungsnuten 22 dazu jeweils einen ringartig umlaufenden, konusflächigen Angriffsabschnitt 23 auf, welche, wie aus Figur 3b deutlich wird, mit dem Verriegelungselement 24 zusammenwirken. Aufgrund der Tatsache, dass die Spannbolzen 12, 14, 16 beim Verriegeln in die Spannaufnahme eingezogen werden, werden sie im nachfolgenden als Einzugsspannbolzen bezeichnet.

Bei dem Einzugsspannbolzen 12 handelt es sich um einen starren Einzugsspannbolzen. Mit derartigen Einzugsspannbolzen 12 kann kein Ausgleich in eine radiale Richtung bereitgestellt werden. Dieser Spannpunkt des starren Einzugsspannbolzens 12 bildet den Referenzpunkt des Spannsystems. Derartige starre Einzugsspannbolzen 12, sind beispielsweise in der DE 10 2010 013 912 A1 oder der DE 10 2013 201 301 A1 beschrieben.

Bei dem Spannbolzen 14 handelt es sich um einen ausgleichenden Einzugsspannbolzen. Dieser Einzugsspannbolzen 14 ist in Figur 3a als Einzelteil und in Figur 3b im Schnitt dargestellt. Der ausgleichende Einzugsspannbolzen weist einen um seine Mittellängsachse 25 verlaufenden Grundabschnitt in Form eines Bolzenkerns 26 und einen um den Bolzenkern 26 in der radialen Richtung 27 beweglich angeordnetes Halteelement 28 auf.

Wie ebenfalls aus den Figuren 3 und 4 deutlich wird, sind die Verriegelungsnuten 22, bzw. die Angriffsabschnitte 23, an den Halteelementen 28 vorgesehen.

Wie aus Figur 3a deutlich wird, weist der Bolzenkern 26 zwei parallel zueinander und in Richtung der radialen Richtung 27 verlaufende Flächenabschnitte 30 auf. Ferner sind am Bolzenkern 26 damit korrespondierende Anlageabschnitte 32 vorgesehen. Über die Flächenabschnitte 30 und die Anlagenabschnitte 32 wird folglich eine Art Führung bereitgestellt, die bewirkt, dass das Halteelement 28 lediglich in eine radiale Richtung, nämlich in die radiale Richtung 27 gegenüber dem Bolzenkern 26 verlagerbar ist. In der Figur 1 ist die radiale Richtung 27 so gewählt, dass sie die Mittellängsachse des starren Einzugsbolzens 12 schneidet. Dadurch wird erreicht, dass bei einer Längenausdehnung des Werkstücks das Werkstück sich in die Richtung 27 hin ausdehnt bzw. bei Abkühlung zusammenzieht.

In der Figur 3b ist deutlich zu erkennen, dass das Halteelement 28 auf der rechten Seite am Bolzenkern 26 anliegt, und dass auf der linken Seite zwischen dem Bolzenkern 26 und dem Halteelement 28 ein Abstand a vorhanden ist, um welchen das Halteelement 28 in radialer Richtung 27 verlagerbar ist.

Der in der Figur 4 gezeigte Einzugsspannbolzen 16 weist, entsprechend dem Einzugsspannbolzen 14 gemäß Figur 3, einen Grundabschnitt in Form eines Bolzenkerns 36 sowie ein Halteelement 38 auf. Allerdings handelt es sich bei dem Einzugsspannbolzen 16 um einen schwimmenden Einzugsspannbolzen. Dieser zeichnet sich dadurch aus, dass der Bolzenkern 36 und das Halteelement 38 derart ausgebildet sind, dass das Halteelement 38 in sämtliche radiale Richtungen um den Bolzenkern 36 beweglich angeordnet ist. Insofern kann hier in Ausgleich eines sich veränderlichenden Abstands in sämtliche Richtungen gewährleistet werden.

Der Bolzenkern 36 weist dazu einen rotationssymmetrischen Außenumfang auf, der in einer mittleren Lage des Halteelements 38 in sämtlichen radialen Richtungen hin zum Bolzenkern 36 einen Ausgleichsabstand aufweist. In der Figur 4b liegt, entsprechend der Figur 3b, auf der rechten Seite das Halteelement 38 am Bolzenkern 36 an; auf der linken Seite ist das Halteelement 38 vom Bolzenkern 36 um das Maß a beabstandet.

Bei einer thermischen Ausdehnung des Werkstücks 10 kann folglich der schwimmende Einzugsspannbolzen 16 ein variierendes Stichmaß zwischen sich und dem starren Einzugsspannbolzen 12 sowie zwischen sich und dem ausgleichenden Einzugsspannbolzen 14 ausgleichen.

Da es sich bei allen drei Spannbolzen 12, 14, 16 um Einzugsspannbolzen handelt, wird zudem gewährleistet, dass sämtliche Spannbolzen, und damit das Werkstück 10, ein identisches Höhenmaß aufweisen.

Um ein größeres Werkstück 10, wie es in Figur 1 gezeigt ist, zusätzlich sicher zu spannen, ist der vierte Spannbolzen 18 vorgesehen, bei dem es sich nicht um einen Einzugsspannbolzen handelt. Dieser Spannbolzen wird, wie in der DE 10 2013 201 310 A1 beschrieben, verwendet, um einen weiteren Spannpunkt bereitzustellen, bei dem kein Niederzug, und damit keine Überbestimmtheit in axialer Richtung, auftritt.

Die Einzugsspannbolzen 14 und 16 sind derart ausgebildet, dass ihre Halteelemente 28, 38 in axialer Richtung zwischen bolzenkernseitigen Schultern 40 vorgesehen sind. Die dem Werkstück 10 abgewandte Schulter 40 wird dabei von dem jeweiligen Bolzenkern 26, 36 gebildet. Die jeweils gegenüberliegende Schulter, die in den Figuren nicht dargestellt ist, wird von einem am Werkstück 10 vorgesehenen Wandabschnitt gebildet.

Insgesamt wird in den Figuren 1 bis 4 folglich ein Spannsystem gezeigt, das unterschiedliche Einzugsspannbolzen aufweist. Es ist dabei ein starrer Einzugsspannbolzen 12, ein ausgleichender Einzugsspannbolzen 14 und ein schwimmender Einzugsspannbolzen 16 vorgesehen. Insgesamt kann hierdurch ein positionsgenaues, wiederholbares Spannen bereitgestellt werden, auch dann noch, wenn das zu spannende Werkstück 10 insbesondere auf Grund von Temperaturausdehnungen seine Abmessungen geringfügig ändert.

Insgesamt kann damit sowohl ein radialer Versatz als auch ein Höhenversatz ausgeglichen werden. Dennoch kann das Werkstück 10 positionsgenau gespannt werden, insbesondere auf Grund des Vorsehens der unterschiedlichen Einzugsspannbolzen 12, 14, 16, wobei der Ausgleichsspannbolzen 18 die Spannung des Werkstücks 10 insgesamt unterstützt.

Bei dem in den Figuren 1 und 2 gezeigten Ausführungsbeispiel sind insgesamt drei Einzugsspannbolzen 12, 14, 16 und lediglich ein Ausgleichsspannbolzen 18 vorgesehen. Je nach Größe des zu spannenden Werkstückes 10 ist allerdings denkbar, dass auch eine größere Anzahl von insbesondere schwimmenden Einzugsspannbolzen 16 oder von Ausgleichsspannbolzen 18 verwendet werden können.

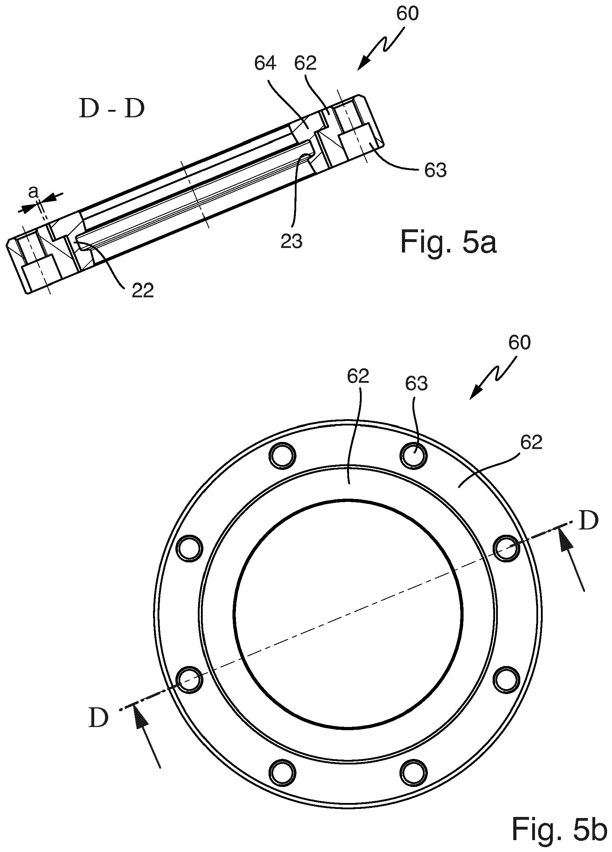

In der Figur 5 ist ein Einzugsspannelement in Form eines Einzugsspannringes 60 gezeigt. Solche Einzugsspannringe 60 können beispielsweise an zu spannende Werkstücke oder an Spannmodulen angeordnet sein. Einzugsspannelemente in Form von starren Einzugsspannringen, die keinen radialen Versatz zulassen, sind beispielsweise aus der EP 2 371 478 A2 bekannt. Zum Spannen dieser Spannringe sind Spannmodule - wie sie ebenfalls aus der EP 2 371 478 A2 bekannt sind - verwendbar, die eine bolzenartige Erhebung aufweisen, welche beim Spannenvorgang in den Einzugsspannring eintaucht und diesen verriegelt.

Im Unterschied zu den bekannten starren Einzugsspannringen sieht der Einzugsspannring 60 in Figur 5a und 5b einen Grundabschnitt in Form eines Ringes 62 vor. Dieser Ring 62 kann über Bohrungen 63 an dem Werkstück bzw. Spannmodul angebracht werden. Ferner sieht der Einzugsspannring 60 ein gegenüber dem Ring 62 in radialer Richtung verlagerbares Halteelement 64 vor. Das Halteelement 64 ist ringsartig ausgebildet und wird dabei vom Ring 62 in radialer Richtung umgeben, wobei es innerhalb des Ringes 62 in alle radiale Richtungen verlagerbar ist. Dazu ist in der Figur 5a zwischen dem Halteelemente 64 und dem Ring 62 ein radialer Abstand a vorgesehen. Bei dem in der Figur 5 gezeigten Einzugsspannelement 60 handelt es sich folglich um ein schwimmendes Einzugsspannelement 60.

Wie ebenfalls aus der Figur 5a deutlich wird, ist am Halteelemente 64 die Verriegelungsnut 23 mit dem Angriffsabschnitt 23 vorgesehen.

Folglich können die Einzugsspannelemente von Einzugsspannbolzen 14, 16, wie sie beispielsweise in den Figuren 1-4 gezeigt sind, und/oder Einzugsspannringen 60, wie sie beispielsweise in Figur 5 gezeigt sind, gebildet sein.

Die Erfindung hat den Vorteil, dass trotz Verwendung von zwei oder drei Einzugsspannelementen ein vergleichsweise großes Werkstück gespannt werden kann, ohne dass eine mechanische Überbestimmung auftritt, welche zu unerwünschten Spannungen im Werkstück beziehungsweise im gesamten Spannsystem führen kann.

## Patentansprüche

1. Einzugsspannelement (14) zum Verriegeln in oder an einer Spannaufnahme (20), insbesondere einer Spannaufnahme eines Nullpunktspannsystems, wobei das Einzugsspannelement (14) einen Angriffsabschnitt (23) derart aufweist, dass beim Verriegeln des Einzugsspannelements (14) ein spannaufnahmeseitiges Verriegelungselement (24) gegen den Angriffsabschnitt (23) so wirkt, dass das Einzugsspannelement (14) in oder gegen die Spannaufnahme (20) gezogen wird, wobei das Einzugsspannelement (14) einen um eine Mittellängsachse (25) verlaufenden Grundabschnitt (26) und ein gegenüber dem Grundabschnitt (26) in einer radialen Richtung beweglich angeordnetes Halteelement (28, 38, 64) aufweist, **dadurch gekennzeichnet, dass** der Grundabschnitt (26) bzw. das Halteelement (28, 38, 64) zwei parallel zueinander und in Richtung der einen radialen (27) Richtung verlaufende Flächenabschnitte (30) aufweist und wobei das Halteelement (28, 38, 64) bzw. der Grundabschnitt (26) mit diesen Flächenabschnitten (30) korrespondierende Anlageabschnitte (32) aufweist, so dass das Halteelement (28, 38, 64) lediglich in der einen radialen Richtung (27) um den Grundabschnitt (26) beweglich angeordnet ist, wobei der Angriffsabschnitt (23) am Halteelement (28, 38, 64) so vorgesehen ist, dass beim Verlagern des Verriegelungselements (24) in die Verriegelungslage ein Ausgleich des Halteelements (28, 38, 64) gegenüber dem Grundabschnitt (26) in der einen radialen Richtung (27) ermöglicht ist.

2. Einzugsspannelement (14) Anspruch 1, **dadurch gekennzeichnet, dass** das Halteelement (28, 38, 64) in axialer Richtung zwischen grundabschnittseitigen Schultern (40) angeordnet ist.

3. Einzugsspannelement (14) nach Anspruch 2, **dadurch gekennzeichnet, dass** der Grundabschnitt (26) ein Grundteil und ein T- oder pilzförmig ausgebildetes Kopfteil (44) umfasst, wobei eine Schulter vom Grundteil und eine Schulter vom Kopfteil (44) gebildet wird.

4. Einzugsspannelement (14) nach einem der vorherigen Ansprüche, **dadurch gekennzeichnet, dass** das Halteelement (28, 38, 64) von einem in der Spannaufnahme zentrischen Basisteil und einem insbesondere lösbar am Basisteil angeordneten, den Angriffsabschnitt aufweisenden Angriffsteil gebildet wird.

5. Einzugsspannelement (14, 16) nach einem der vorherigen Ansprüche, **dadurch gekennzeichnet, dass** das Einzugsspannelement als Einzugsspannbolzen (14, 16) ausgebildet ist, bei dem das Halteelement (28, 38) den Grundabschnitt (26, 36) in radialer Richtung umgibt.

6. Spannsystem, insbesondere Nullpunktspannsystem, mit zwei oder mehreren Spannaufnahmen (20) die jeweils wenigstens ein verlagerbares Verriegelungselement (24) aufweisen, und mit zwei oder mehreren an einem Werkstück oder einem Spannmodul anordenbaren Spannelementen (12, 14, 16, 18, 60), die an den Spannaufnahmen (20) verriegelbar sind, **dadurch gekennzeichnet, dass** ein Spannelement als starres Einzugsspannelement (12) ausgebildet ist, das keinen Ausgleich in eine radiale Richtung zulässt, und dass wenigstens ein Spannelement als Einzugsspannelement (14) nach einem der vorhergehenden Ansprüche ausgebildet ist.

7. Spannsystem nach Anspruch 6, **dadurch gekennzeichnet,**
- **dass** ein Spannelement als starres Einzugsspannelement (12) ausgebildet ist, das keinen Ausgleich in eine radiale Richtung zulässt,
- **dass** ein Spannelement als ausgleichendes Einzugsspannelement (14) nach einem der Ansprüche 1 bis 6 ausgebildet ist, das einen Ausgleich lediglich in die zum starren Einzugsspannelement (12) verlaufende radiale Richtung (27) zulässt, und
- **dass** wenigstens ein weiterer Spannelement als schwimmendes Einzugsspannelement (16, 60) ausgebildet ist, das einen Ausgleich in sämtliche radiale Richtungen zulässt.

## Claims

1. Retractable clamping element (14) for locking in or on a clamping receiver (20), in particular a clamping receiver of a zero-point clamping system, wherein the retractable clamping element (14) has an engagement section (23) such that, when the retractable clamping element (14) is locked, a locking element (24) on the clamping receiver side acts against the engagement section (23) in such a way that the retractable clamping element (14) is pulled into or against the clamping receiver (20), wherein the retractable clamping element (14) has a base section (26) running around a central longitudinal axis (25) and a holding element (28, 38, 64) arranged so as to be mobile in a radial direction relative to the base section (26), **characterized in that** the base section (26) or the holding element (28, 38, 64) has two surface sections (30) running parallel to one another in the direction of the one radial (27) direction and wherein the holding element (28, 38, 64) or the base section (26) has contact sections (32) corresponding with these surface sections (30), such that the holding element (28, 38, 64) is arranged to only be mobile about the base section (26) in the one radial direction (27), wherein the engagement section (23) is provided on the holding element (28, 38, 64) such that, when the locking element (24) is displaced into the locking position, a compensation of the holding element (28, 38, 64) relative to the base section (26) is enabled in the one radial direction (27).

2. Retractable clamping element (14) claim 1, **characterized in that** the holding element (28, 38, 64) is arranged in the axial direction between shoulders (40) on the base section side.

3. Retractable clamping element (14) according to claim 2, **characterized in that** the base section (26) comprises a base part and a head part (44) designed to be T-shaped or mushroom-shaped, wherein a shoulder is formed by the base part and a shoulder is formed by the head part (44).

4. Retractable clamping element (14) according to one of the preceding claims, **characterized in that** the holding element (28, 38, 64) is formed by a central basis part in the clamping receiver and an engagement part which is arranged in particular detachably on the basis part and which has the engagement section.

5. Retractable clamping element (14, 16) according to one of the preceding claims, **characterized in that** the retractable clamping element is designed as a retractable clamping pin (14, 16), in which the holding element (28, 38) surrounds the base section (26, 36) in the radial direction.

6. Clamping system, in particular zero-point clamping system, with two or more clamping receivers (20) each having at least one displaceable locking element (24), and with two or more clamping elements (12, 14, 16, 18, 60) that can be arranged on a workpiece or a clamping module and which can be locked on the clamping receivers (20), **characterized in that** a clamping element is designed as a rigid retractable clamping element (12) which does not allow any compensation in a radial direction, and **in that** at least one clamping element is designed as a retractable clamping element (14) according to one of the preceding claims.

7. Clamping system according to claim 6, **characterized**
- **in that** a clamping element is designed as a rigid retractable clamping element (12) which does not allow any compensation in a radial direction,
- **in that** a clamping element is designed as a compensating retractable clamping element (14) according to one of claims 1 to 6, which only allows compensation in the radial direction (27) running towards the rigid retractable clamping element (12), and
- **in that** at least one further clamping element is designed as a floating retractable clamping element (16, 60), which allows compensation in all radial directions.

## Revendications

1. Elément de serrage à rentrage (14) pour le verrouillage dans ou sur un logement de serrage (20), en particulier un logement de serrage d'un système de serrage point zéro, dans lequel l'élément de serrage à rentrage (14) présente une section d'attaque (23), de telle sorte que, lors du verrouillage de l'élément de serrage à rentrage (14), un élément de verrouillage (24) côté logement de serrage agit contre la section d'attaque (23), de sorte que l'élément de serrage à rentrage (14) est tiré dans ou contre le logement de serrage (20), dans lequel l'élément de serrage à rentrage (14) présente une section de fond (26) s'étendant autour d'un axe médian longitudinal (25) et un élément de retenue (28, 38, 64) disposé de manière mobile dans une direction radiale par rapport à la section de fond (26), **caractérisé en ce que** la section de fond (26) ou l'élément de retenue (28, 38, 64) présente deux sections de surface (30) s'étendant parallèlement l'une à l'autre et en direction de l'une des directions radiales (27) et dans lequel l'élément de retenue (28, 38, 64) ou la section de fond (26) présente des sections d'appui (32) correspondant à ces sections de surface (30), de sorte que l'élément de retenue (28, 38, 64) est disposé de manière à se déplacer autour de la section de fond (26) uniquement dans l'une des directions radiales (27), dans lequel la section d'attaque (23) est prévue sur l'élément de retenue (28, 38, 64), de sorte que, lors du déplacement de l'élément de verrouillage (24) dans la position de verrouillage, une compensation de l'élément de retenue (28, 38, 64) par rapport à la section de fond (26) dans une des directions radiales (27) est permise.

2. Elément de serrage à rentrage (14) selon la revendication 1, **caractérisé en ce que** l'élément de retenue (28, 38, 64) est disposé dans la direction axiale entre des épaulements (40) côté section de fond.

3. Elément de serrage à rentrage (14) selon la revendication 2, **caractérisé en ce que** la section de fond (26) comprend une partie de fond et une partie tête (44) réalisée en forme de T ou de champignon, dans lequel un épaulement est formé par la partie de fond et un épaulement par la partie tête (44).

4. Elément de serrage à rentrage (14) selon l'une quelconque des revendications précédentes, **caractérisé en ce que** l'élément de retenue (28, 38, 64) est formé par une partie de base centrale dans le logement de serrage et une partie d'attaque disposée en particulier de manière détachable sur la partie de base, présentant la section d'attaque.

5. Elément de serrage à rentrage (14, 16) selon l'une quelconque des revendications précédentes, **caractérisé en ce que** l'élément de serrage à rentrage est réalisé sous la forme d'un boulon de serrage à rentrage (14, 16), où l'élément de retenue (28, 38) entoure la section de fond (26, 36) dans la direction radiale.

6. Système de serrage, en particulier système de serrage point zéro, avec deux logements de serrage (20) ou plus qui présentent respectivement au moins un élément de verrouillage (24) déplaçable, et avec deux éléments de serrage (12, 14, 16, 18, 60) ou plus pouvant être disposés sur une pièce ou un module de serrage, qui peuvent être verrouillés sur les logements de serrage (20), **caractérisé en ce qu'**un élément de serrage est réalisé sous la forme d'un élément de serrage à rentrage (12) rigide, qui ne présente pas de compensation dans une direction radiale, et qu'au moins un élément de serrage est réalisé sous la forme d'un élément de serrage à rentrage (14) selon l'une quelconque des revendications précédentes.

7. Système de serrage selon la revendication 6, **caractérisé en ce**
- **qu'**un élément de serrage est réalisé sous la forme d'un élément de serrage à rentrage (12) rigide, qui n'admet pas de compensation dans une direction radiale,
- **qu'**un élément de serrage est réalisé sous la forme d'un élément de serrage à rentrage (14) de compensation selon l'une quelconque des revendications 1 à 6, qui admet une compensation uniquement dans la direction radiale (27) s'étendant par rapport à l'élément de serrage à rentrage (12) rigide, et
- **qu'**au moins un autre élément de serrage est réalisé sous la forme d'un élément de serrage à rentrage (16, 60) flottant, qui admet une compensation dans toutes les directions radiales.
